Europäisches Patentamt

European Patent Office

Office européen des brevets

(19)

(11) Numéro de publication : **0 188 142**
**B1**

(12) # FASCICULE DE BREVET EUROPÉEN

(45) Date de publication du fascicule du brevet :
**15.06.88**

(51) Int. Cl.⁴ : **B 60 H   1/00, B 60 H   1/24**

(21) Numéro de dépôt : **85402344.7**

(22) Date de dépôt : **28.11.85**

(54) **Dispositif de commande d'organes mobiles, tels que des volets d'une installation de chauffage et de ventilation ou de climatisation pour véhicule automobile.**

(30) Priorité : **20.12.84 FR 8419579**

(43) Date de publication de la demande :
**23.07.86 Bulletin 86/30**

(45) Mention de la délivrance du brevet :
**15.06.88 Bulletin 88/24**

(84) Etats contractants désignés :
**DE IT**

(56) Documents cités :
**EP-A- 0 053 462**
**EP-A- 0 125 976**
**FR-A- 2 220 727**
**FR-A- 2 491 839**
**GB-A- 2 100 417**
**US-A- 4 448 390**

(73) Titulaire : **VALEO**
**64, avenue de la Grande Armée**
**F-75848 Paris Cédex 17 (FR)**

(72) Inventeur : **Bouvot, Jean-François**
**2, rue des Grands Prés Le Mesnil Sévin**
**F-78720 Dampierre (FR)**

(74) Mandataire : **Ramey, Daniel et al**
**Cabinet NETTER 40, rue Vignon**
**F-75009 Paris (FR)**

## Description

L'invention concerne un dispositif de commande d'organes mobiles, tels par exemple que des volets d'une installation de chauffage et de ventilation ou de climatisation d'un habitacle de véhicule automobile, du type conforme au préambule de la revendication 1 et comprenant des vérins simple effet dont les tiges de piston sont reliées aux organes mobiles pour les déplacer dans des positions prédéterminées et qui sont alimentés par un distributeur reliant ces vérins à une source de fluide sous pression et à un échappement, et commandé lui-même par un moyen de commande prévu par exemple sur le tableau de bord du véhicule pour être actionné par le conducteur ou le passager avant.

Les dispositifs connus de commande fluidique de ce type sont préférables, en raison de la douceur de commande qu'ils procurent, aux commandes classiques du type mécanique comprenant des agencements de leviers et de câbles. De plus, en cas de panne ou d'arrêt de la source de dépression, les organes mobiles peuvent être automatiquement amenés dans une position privilégiée de sécurité, par les ressorts de rappel des vérins de déplacement. Ces dispositifs de commande fluidique n'ont toutefois été utilisés, jusqu'à présent, que pour déplacer un seul volet à la fois ou, à la limite, deux volets lorsqu'ils sont déplaçables sur des trajectoires extérieures les unes aux autres.

Il existe cependant des installations de chauffage et de ventilation ou de climatisation pour véhicules qui comprennent plusieurs volets montés rotatifs autour d'axes parallèles et actionnés par un dispositif de commande unique pour être déplacés dans des positions prédéterminées, en synchronisme ou non selon les cas, ces volets étant en général destinés à réaliser le mélange et la distribution de débits d'air chaud et d'air froid passant dans l'installation ; ces volets étant relativement proches les uns des autres, leurs trajectoires peuvent se recouper. Il arrive donc, dans une telle installation, que deux volets ne puissent être déplacés simultanément, un volet devant nécessairement être déplacé le premier et l'autre volet en second, pour que ces deux volets ne butent pas l'un sur l'autre et ne se bloquent pas mutuellement.

Les problèmes relativement complexes que pose la commande des volets dans une installation de ce type ont été résolus jusqu'à présent par des moyens mécaniques comprenant des agencements de cames, ce qui augmente encore la dureté de la manœuvre du moyen de commande pour certaines positions de celui-ci correspondant à certaines fonctions de l'installation, et ce qui peut même conduire à un blocage des volets dans certaines conditions d'utilisation du véhicule, par exemple lorsque celui-ci se déplace à très grande vitesse et que les volets sont dans des positions de fermeture des orifices de sortie du boîtier dans lequel ils sont logés.

L'invention a pour objet un dispositif de commande fluidique d'organes mobiles, tels que les volets d'une installation de chauffage et de ventilation ou de climatisation pour véhicule automobile, qui permette d'éviter les inconvénients des dispositifs mécaniques et qui soit applicable à toutes les installations à plusieurs volets, que les trajectoires de ces volets se recoupent ou non.

L'invention propose à cet effet un dispositif de commande d'organes mobiles, du type ci-dessus, caractérisé en ce qu'il comprend des moyens fluidiques d'asservissement du déplacement d'au moins un organe mobile au déplacement d'au moins un autre organe mobile, ces moyens étant propres à détecter la présence ou l'absence d'un organe mobile dans une position prédéterminée pour autoriser ou interdire le déplacement d'un autre organe mobile en fonction de ladite présence ou absence détectée.

Ainsi, le dispositif de commande selon l'invention permet, par un moyen de commande unique actionné par l'utilisateur, de déplacer successivement, selon les cas, un organe mobile, puis un aute organe mobile, de telle sorte que le premier organe mobile soit arrivé dans une position prédéterminée avant que le deuxième organe mobile ne commence son déplacement vers une position prédéterminée, la priorité de déplacement d'un organe mobile étant choisie de telle sorte que les organes mobiles ne puissent buter les uns sur les autres au cours de leurs déplacements et ne se bloquent pas mutuellement.

Selon une autre caractéristique de l'invention, ces moyens fluidiques d'asservissement sont intégrés au distributeur précité, et comprennent des chambres formées dans le distributeur dont chacune est, d'une part, propre à être reliée à l'orifice d'alimentation du vérin d'un organe mobile déterminé quand le moyen de commande est dans une position ou un état déterminé et à en être isolée quand le moyen de commande est dans une autre position ou un autre état et, d'autre part, propre à être reliée à l'échappement ou à la source de fluide sous pression par des moyens associés à un autre organe mobile uniquement lorsque cet autre organe mobile est dans une position prédéterminée et à en être isolée quand il est dans une autre position.

De cette façon, c'est la présence ou l'absence d'un organe mobile dans une position prédéterminée qui va commander l'alimentation ou l'isolement du vérin de déplacement d'un autre organe mobile. Cela garantit que cet autre organe mobile ne sera pas déplacé tant que le premier organe mobile n'est pas arrivé dans la position prédéterminée où il ne peut gêner le mouvement de l'autre organe mobile, et où son propre mouvement ne peut plus être gêné ou empêché par le mouvement de l'autre organe mobile.

Par ailleurs, le dispositif de commande selon l'invention, dont les moyens d'asservissement sont intégrés au distributeur de fluide sous pres-

sion, est réalisé de façon particulièrement compacte et peu encombrante. Son montage et son raccordement aux vérins de déplacement des organes mobiles, à la source de pression et à l'échappement en sont d'autant facilités.

Selon d'autres caractéristiques de l'invention, les chambres précitées faisant partie des moyens d'asservissement sont formées dans le distributeur entre un élément fixe de celui-ci et un premier élément mobile relié au moyen de commande et déplaçable par celui-ci dans des positions prédéterminées sur l'élément fixe.

Le distributeur comprend également des seconds éléments mobiles, dont chacun est relié à la tige de piston d'un vérin ou à l'organe mobile associé à ce vérin et est déplaçable par celui-ci sur l'élément fixe dans des positions prédéterminées, l'élément fixe du distributeur comprenant des passages de fluide établissant des communications entre des chambres formées avec le premier élément mobile et des chambres formées avec les seconds éléments mobiles, en fonction des positions des éléments mobiles sur l'élément fixe.

Les chambres formées entre l'élément fixe et le premier élément mobile relié au moyen de commande comprennent au moins une chambre reliée à la source de fluide sous pression, une chambre reliée à l'échappement, une chambre isolée, et des chambres précitées faisant partie des moyens d'asservissement, qui sont propres à être reliées à la source de fluide sous pression ou à l'échappement et à en être isolées en fonction des positions des organes mobiles.

Les chambres formées entre l'élément fixe du distributeur et chacun des seconds éléments mobiles reliés aux organes mobiles ou aux tiges de piston des vérins associés, comprennent un nombre de chambres égal au nombre de positions que peut occuper chaque second élément mobile sur l'élément fixe, et au moins une chambre supplémentaire pour détecter la présence de l'élément mobile dans une position prédéterminée sur l'élément fixe.

Cette chambre supplémentaire est reliée à la source de fluide sous pression ou à l'échappement par un passage de fluide formé dans l'élément mobile lorsque celui-ci est dans ladite position déterminée, et en est isolée quand l'élément mobile est dans une autre position. En outre, chaque second élément mobile du distributeur est relié à l'orifice d'alimentation du vérin associé par un conduit de fluide dont l'extrémité débouche dans l'une ou l'autre des chambres formées par cet élément mobile avec l'élément fixe.

L'élément fixe comprend autant de passages de fluide par second élément mobile qu'il y a de chambres entre l'élément fixe et ce second élément mobile, chacune de ces chambres étant reliée en permanence par un de ces passages de fluide à une chambre formée entre l'élément fixe et le premier élément mobile du distributeur.

Le distributeur de fluide sous pression selon l'invention permet donc, par une commande unique, de déplacer plusieurs organes dans des positions prédéterminées, en respectant automatiquement des propriétés de déplacement de ces organes mobiles les uns par rapport aux autres de façon à éviter un blocage mutuel de ces organes mobiles.

L'effort de manœuvre qu'il faut appliquer au moyen de commande est constant et totalement indépendant des efforts de déplacement des organes mobiles.

Dans la description qui suit, faite à titre d'exemple, on se réfère aux dessins annexés, dans lesquels :

— la figure 1 est une vue schématique en coupe d'une partie d'une installation de chauffage et de ventilation ou de climatisation d'un habitacle de véhicule automobile, comprenant deux volets rotatifs ;

— la figure 2 représente schématiquement les diverses fonctions réalisables par les volets de cette installation, selon leurs positions angulaires respectives ;

— la figure 3 est une vue schématique de l'ensemble d'un dispositif de commande selon l'invention ;

— la figure 4 est une vue schématique en coupe illustrant le principe de déplacement d'un organe mobile par un vérin simple effet au moyen d'un distributeur selon l'invention ;

— les figures 5A et 5B sont des tableaux indiquant les liaisons à la source de fluide sous pression et à l'échappement des chambres d'un distributeur pour chaque position des organes mobiles ;

— la figure 6 est une vue en coupe transversale d'un distributeur de fluide selon l'invention ;

— la figure 7 est une vue en coupe longitudinale de ce distributeur ;

— la figure 8 est une vue en plan de la face interne du premier élément mobile du distributeur, relié au moyen de commande ;

— les figures 9 et 10 sont des vues en plan des garnitures recouvrant la face de l'élément fixe du distributeur, qui est associée aux seconds éléments mobiles reliés aux organes mobiles ;

— la figure 11 est une vue en coupe longitudinale d'un second élément mobile ;

— les figures 12 et 13 représentent les faces internes des seconds éléments mobiles du distributeur des figures 6 et 7 ;

— les figures 14 à 16 sont des vues schématiques illustrant le fonctionnement du distributeur de fluide selon l'invention.

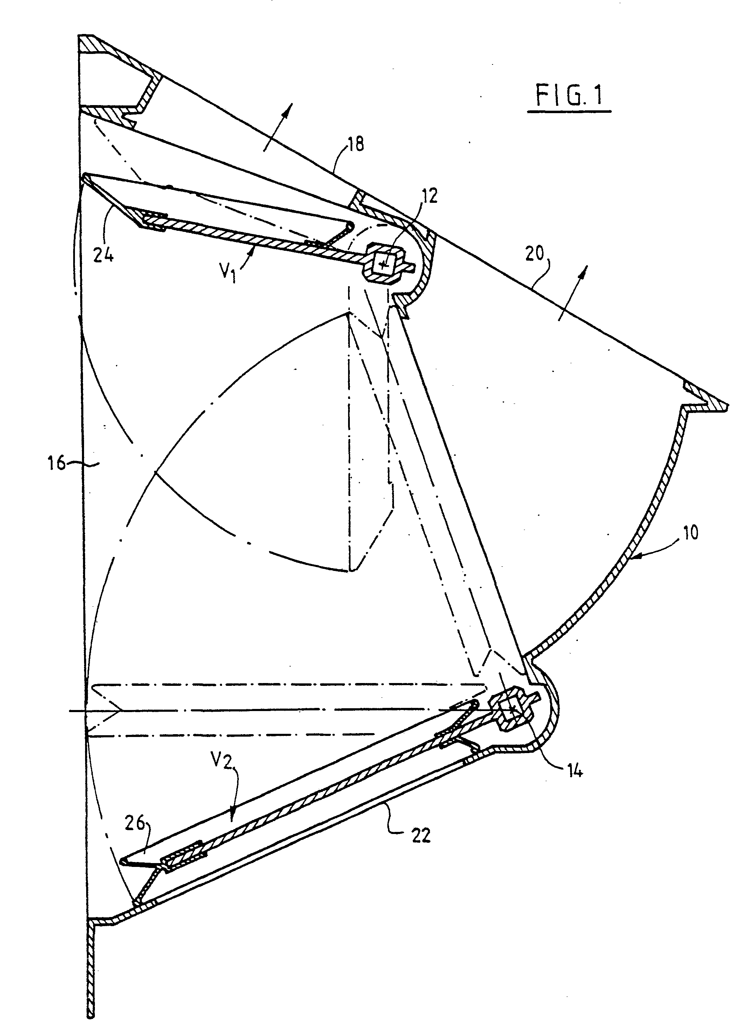

On se réfère d'abord à la figure 1 représentant une installation de chauffage et de ventilation ou de climatisation de l'habitacle d'un véhicule automobile.

Cette installation comprend un boîtier fixe 10 logeant deux volets V1 et V2 montés rotatifs autour d'axes parallèles 12 et 14 et pouvant occuper chacun trois positions prédéterminées.

Le boîtier 10 comprend un passage 16 d'arrivée d'air chaud, d'air froid ou d'air à une température intermédiaire, et trois orifices principaux de sortie, désignés par les références 18, 20 et 22 respectivement. Le volet V1 est équipé d'une garniture d'étanchéité 24 et peut occuper trois positions angulaires prédéterminées autour de son axe 12 de rotation. Dans la première position, le volet V1 ferme de façon étanche l'orifice de sortie 18. Dans la seconde position, qui est celle représentée en trait plein en figure 1, le volet V1 est légèrement écarté de l'orifice de sortie 18. Dans la troisième position, représentée en trait fantôme en figure 1, le volet V1 est dans une position de fermeture partielle de l'orifice de sortie 20 du boîtier 10.

Le volet V2 est également équipé d'une garniture d'étanchéité 26 et peut occuper autour de son axe de rotation 14 trois positions angulaires prédéterminées. Dans la première position, il ferme de façon étanche l'orifice de sortie 22. Dans la seconde position, représentée en trait fantôme en figure 1, il est légèrement écarté de l'orifice de sortie 22. Dans la troisième position, représentée également en trait fantôme en figure 1, il ferme de façon étanche l'orifice de sortie 20 du boîtier 10.

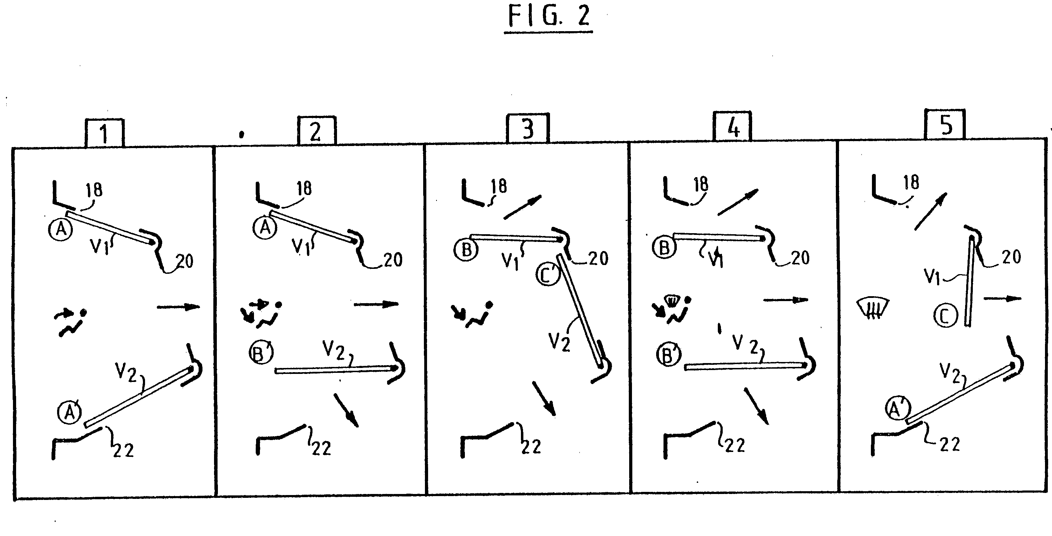

Les deux volets V1 et V2 sont actionnés par un dispositif de commande unique pouvant occuper cinq positions ou états prédéterminés auxquels correspondent cinq combinaisons de positions des volets V1 et V2, qui sont représentées schématiquement en figure 2.

Le moyen de commande, monté sur le tableau de bord d'un véhicule automobile, peut être du type à levier ou curseur déplaçable le long d'une trajectoire rectiligne.

L'état n° 1 ou la première position du moyen de commande correspond à la fonction ventilation de l'installation, pour laquelle le volet V1 est dans sa position A de fermeture de l'orifice 18 du boîtier 10 et le volet V2 est dans sa position A' de fermeture de l'orifice inférieur 22. Tout l'air amené dans le boîtier 10 sort par l'orifice intermédiaire 20.

L'état n° 2 ou la deuxième position du moyen de commande correspond à une fonction ventilation plus chauffage de l'installation. Le volet V1 est toujours dans sa position A de fermeture de l'orifice supérieur 18, et le volet V2 est dans sa position B' intermédiaire entre les orifices 20 et 22. L'air amené dans le boîtier 10 sort donc par les orifices 20 et 22.

L'état n° 3 ou la troisième position du moyen de commande correspond à la fonction « fuite désembuage-dégivrage » du pare-brise plus chauffage de l'installation. Le volet V1 est dans sa position intermédiaire B et le volet V2 est dans sa position C' de fermeture de l'orifice intermédiaire 20 du boîtier. L'air amené dans le boîtier sort donc par l'orifice supérieur 18 du boîtier et par l'orifice inférieur 22.

L'état n° 4 ou la quatrième position du moyen de commande correspond à la fonction « fuite dégivrage-désembuage » du pare-brise, désembuage latéral et ventilation, chauffage. Le volet V1 est dans sa position intermédiaire B, et le volet V2 est dans sa position intermédiaire B'. L'air amené dans le boîtier 10 sort par les orifices 18, 20 et 22.

L'état n° 5 du moyen de commande ou la cinquième position de ce moyen de commande correspond à la fonction dégivrage-désembuage du pare-brise et désembuage latéral, ventilation. Le volet V1 est dans sa position C de fermeture partielle de l'orifice intermédiaire 20 et le volet V2 est dans sa position A' de fermeture de l'orifice inférieur 22. L'air amené dans le boîtier 10 sort donc de ce boîtier par les orifices 18 et 20.

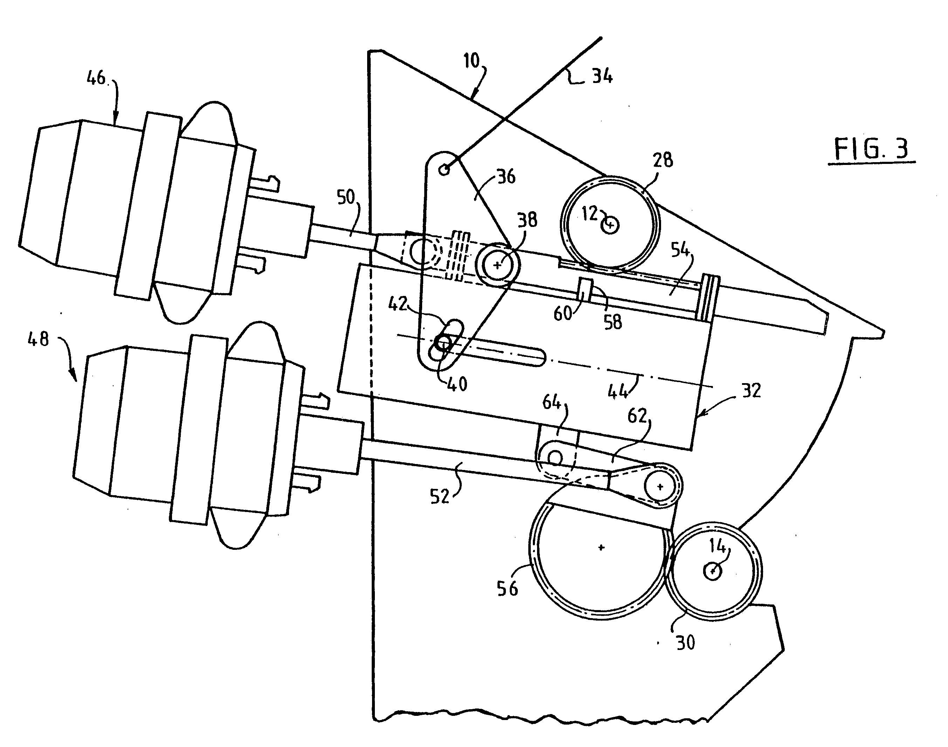

La figure 3 est une vue schématique d'ensemble de l'installation des figures 1 et 2 et de son dispositif de commande fluidique selon l'invention.

On retrouve en figure 3 le boîtier 10 de la figure 1, représenté en vue extérieure, ainsi que les extrémités des axes 12 et 14 de rotation des volets V1 et V2, ces extrémités étant extérieures au boîtier 10 et solidaires de roues dentées ou de pignons 28 et 30 respectivement.

Le dispositif de commande selon l'invention comprend un distributeur de fluide sous pression, désigné dans son ensemble par la référence 32, qui est porté par une paroi extérieure du boîtier 10.

Le distributeur 32 comprend un premier élément mobile, non visible en figure 3, et relié à un moyen de commande prévu sur le tableau de bord du véhicule automobile, par un câble de commande 34 et un levier de renvoi 36 monté pivotant autour d'un axe fixe 38. L'élément mobile précité du distributeur comprend par exemple un embout tubulaire 40 reçu dans une fente ou lumière 42 du levier de renvoi 36 de telle sorte que, quand le levier de renvoi 36 pivote autour de l'axe fixe 38, l'embout tubulaire 40 du premier élément mobile du distributeur se déplace en translation le long de l'axe 44.

Le distributeur 32 comprend également deux seconds éléments mobiles, associés aux volets V1 et V2 respectivement.

Chaque volet V1, V2 est déplacé en rotation autour de son axe 12, 14 par un vérin pneumatique 46, 48 respectivement dont le cylindre est fixe et dont la tige de piston 50, 52 respectivement est reliée au volet V1, V2 correspondant. Dans l'exemple représenté, la tige de piston 50 du vérin 46 est reliée au volet V1 par une crémaillère rectiligne 54 supportée et guidée en translation le long d'une face latérale du boîtier du distributeur 32 et engrenant avec le pignon 28 porté par l'extrémité de l'axe 12 du volet V1.

En ce qui concerne le volet V2, la tige de piston 52 du vérin 48 est articulée à son extrémité libre sur la périphérie d'un pignon ou d'une roue dentée 56 en prise avec le pignon 30 de l'extrémité de l'axe 14 du volet V2.

La crémaillère 54 associée au vérin 46 de déplacement du volet V1 comprend une encoche latérale 58 dans laquelle est engagé un doigt 60 du second élément mobile du distributeur, associé au volet V1. La tige de piston 52 du vérin 48 de déplacement du volet V2 est reliée par une biellette 62 à un doigt latéral 64 du second élément mobile du distributeur qui est associé au volet V2.

Comme on le verra par la suite, les seconds éléments mobiles du distributeur sont reliés par un conduit de fluide aux orifices d'alimentation des vérins 46 et 48, pour les alimenter en fluide sous pression ou pour les mettre à l'échappement.

On voit sur la figure 3 que, quand la tige de piston 50 du vérin 46 est rétractée complètement à l'intérieur du cylindre de ce vérin, le volet V1 est amené dans une position extrême par rotation du pignon 28 dans le sens des aiguilles d'une montre, cette position du volet V1 étant la position A de la figure 2. Inversement, et comme représenté, si la tige de piston 50 est complètement sortie du vérin 46, le pignon 28 est entraîné en rotation par la crémaillère 54 dans le sens contraire des aiguilles d'une montre et amène le volet V1 dans sa position extrême opposée, qui est la position C en figure 2.

Lorsque la tige de piston 52 du vérin 48 est complètement sortie du cylindre de ce vérin, comme représenté en figure 3, elle a amené le volet V2 dans sa position extrême désignée par la référence A' en figure 2, par rotation du pignon 56 dans le sens des aiguilles d'une montre et rotation du pignon 30 dans le sens contraire des aiguilles d'une montre. Lorsque la tige de piston 52 est complètement rétractée à l'intérieur du cylindre du vérin 48, elle fait tourner le pignon 56 dans le sens contraire des aiguilles d'une montre et le pignon 30 dans le sens des aiguilles d'une montre et amène le volet V2 dans sa position extrême opposée, désignée par la référence C' en figure 2.

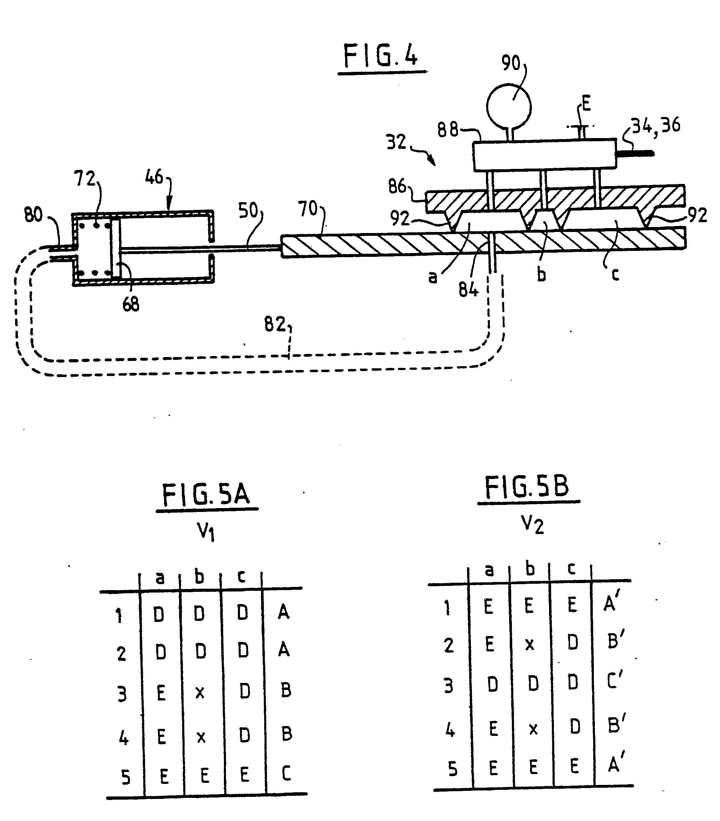

La figure 4 illustre schématiquement le principe de fonctionnement du dispositif qui vient d'être décrit, et par exemple le dispositif de commande du volet V1. Le vérin 46 représenté en coupe en figure 4 est un vérin simple effet ou du type tout ou rien, comprenant un piston 68 relié par la tige de piston 50 à un second élément mobile 70 du distributeur 32. Un ressort de rappel 72 est interposé entre le piston 68 et une paroi de fond du cylindre du vérin, qui comprend un orifice d'alimentation 80 relié par un conduit 82 à un passage de fluide 84 du second élément mobile 70 du distributeur. La paroi opposée du cylindre est traversée librement par la tige de piston 50.

Le distributeur 32 comprend un élément fixe 86 interposé entre le second élément mobile 70 relié à la tige de piston 50 du vérin 46 et un premier élément mobile 88 relié au moyen de commande par le câble 34 et le levier 36 de la figure 3, et raccordé également en permanence à une source de fluide sous pression 90 ainsi qu'à l'échappement E.

Dans le cas d'une installation de chauffage ou de climatisation pour véhicule automobile, la source de fluide sous pression est en fait une source de dépression, la dépression étant prélevée par exemple sur le collecteur d'admission du moteur du véhicule, et l'échappement étant constitué par un simple orifice de mise à l'air libre.

L'élément fixe 86 du distributeur 32 comprend des lèvres ou nervures d'étanchéité 92 qui déterminent avec le second élément mobile 70 trois chambres a, b et c dans l'une ou l'autre desquelles peut déboucher le passage de fluide 84 de l'élément 70, relié à l'orifice d'alimentation 80 du vérin 46. Chacune de ces chambres a, b, c peut être reliée à la source de fluide sous pression 90 ou à l'échappement E par le premier élément mobile 88 du distributeur, ou bien peut en être isolée, en fonction de l'état ou de la position du moyen de commande qui est transmis au premier élément mobile 88 par le câble 34 et le levier de renvoi 36.

Le tableau 5A donne les liaisons des chambres a, b et c du distributeur à la source de fluide sous pression et à l'échappement, ou leur isolement, pour les états ou positions 1, 2, 3, 4, 5 du moyen de commande et les positions A, B et C que doit occuper le volet V1 dans l'installation, comme représenté en figure 2.

Ainsi, pour l'état ou la position n° 1 ou n° 2 du moyen de commande, le volet V1 doit occuper la position A, qui, d'après la figure 3, est la position pour laquelle la tige 50 est complètement rétractée à l'intérieur du vérin 46, qui est donc alimenté en dépression. Pour que le volet V1 soit dans la position A dans toutes les circonstances possibles, il faut que les chambres a, b et c du distributeur soient toutes les trois alimentées en dépression. Cette alimentation est représentée par la lettre D dans le tableau de la figure 5A.

Pour l'état ou la position n° 3 du vérin de commande, le volet V1 est dans sa position intermédiaire B dans laquelle il ne peut être amené et maintenu que si la chambre a est reliée à l'échappement E, la chambre intermédiaire b est isolée de la dépression ou de l'échappement (cet état étant représenté par la lettre X) et la chambre c est alimentée en dépression.

Les conditions sont les mêmes pour l'état ou la position n° 4 du moyen de commande, le volet V1 étant toujours dans la position B.

Pour l'état ou la position n° 5 du moyen de commande, le volet V1 est dans la position C, correspondant à la tige de piston 50 complètement sortie du vérin 46. Le volet V1 ne peut être amené et maintenu dans cette position que si les trois chambres a, b et c sont reliées à l'échappement E.

La figure 5B est un tableau correspondant pour le volet V2.

Pour l'état ou la position n° 1 du moyen de commande, le volet V2 se trouve dans sa position A', pour laquelle la tige de piston 52 est complètement sortie du vérin 48. Le vérin est donc relié à l'échappement et le volet V2 ne peut être amené et maintenu dans cette position que si les trois chambres a, b et c sont reliées à l'échappement.

Dans la position ou l'état n° 2 du moyen de commande, le volet V2 est dans sa position intermédiaire B', dans laquelle il ne peut être amené et maintenu que si la chambre a est reliée à l'échappement, la chambre intermédiaire b est isolée et la chambre c est reliée à la dépression.

Dans l'état ou la position n° 3 du moyen de commande, le volet V2 est dans la position C', pour laquelle la tige de piston 52 est complètement rentrée à l'intérieur du vérin 48, ce qui signifie que les trois chambres a, b et c sont alimentées en dépression D.

Pour l'état ou la position n° 4 du moyen de commande, le volet V2 est à nouveau dans la position intermédiaire B', pour laquelle la chambre a est reliée à l'échappement, la chambre b est isolée et la chambre c est alimentée en dépression D.

Pour la position ou l'état n° 5 du moyen de commande, le volet V2 est dans la position A', pour laquelle les trois chambres a, b et c sont reliées à l'échappement E.

La figure 2 permet de constater que, si l'on actionne le moyen de commande pour passer successivement dans les positions 1, 2, 3, 4 et 5 ou 5, 4, 3, 2, 1, les volets V1 et V2 se déplacent sans se bloquer mutuellement, à aucun moment. Par contre, si l'on actionne le moyen de commande pour passer directement de l'état n° 3 à l'état n° 5, on voit que le volet V1 ne peut être amené de sa position B à sa position C si le volet V2 n'a pas d'abord été déplacé de sa position C' à sa position A'. De même, on ne peut passer directement de l'état n° 5 à l'état n° 3 que si le volet V1 est d'abord déplacé de sa position C à sa position B avant que le volet V2 ne soit déplacé de sa position A' à sa position C'.

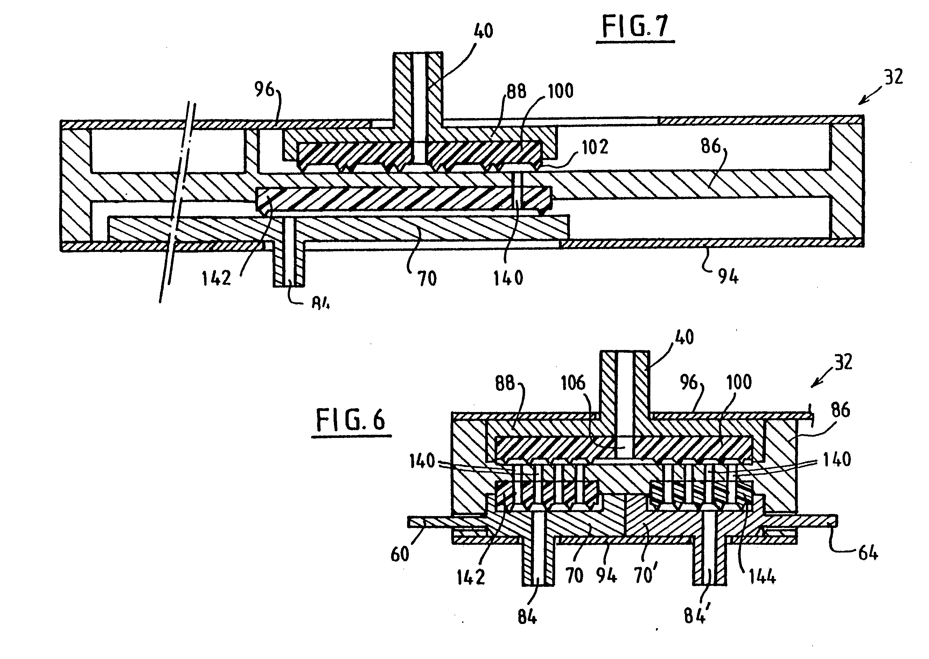

Le dispositif de commande selon l'invention permet de réaliser ces déplacements prioritaires des volets V1 et V2 dans certaines conditions, de la façon qui va être maintenant expliquée en référence aux figures 6 et suivantes.

Le distributeur 32 de fluide selon l'invention, représenté en détail dans les figures 6 et 7 comprend, comme on l'a déjà vu, un premier élément mobile 88, relié au moyen de commande, un élément fixe 86, et deux seconds éléments mobiles 70 et 70' reliés aux volets V1 et V2 respectivement, ou aux tiges de piston de leurs vérins de déplacement, par leurs doigts latéraux 60, 64 respectivement.

L'élément fixe 86 comprend des rebords latéraux délimitant des logements recevant les éléments mobiles 70, 70' et 88, et qui sont fermés par des couvercles 94, 96 comprenant des fentes ou lumières longitudinales traversées par les embouts 84 et 84' de raccordement aux orifices d'alimentation des vérins 46 et 48 et par le doigt 40 de l'élément mobile 88, qui est guidé dans la lumière 42 du levier de renvoi 46 précité (figure 3).

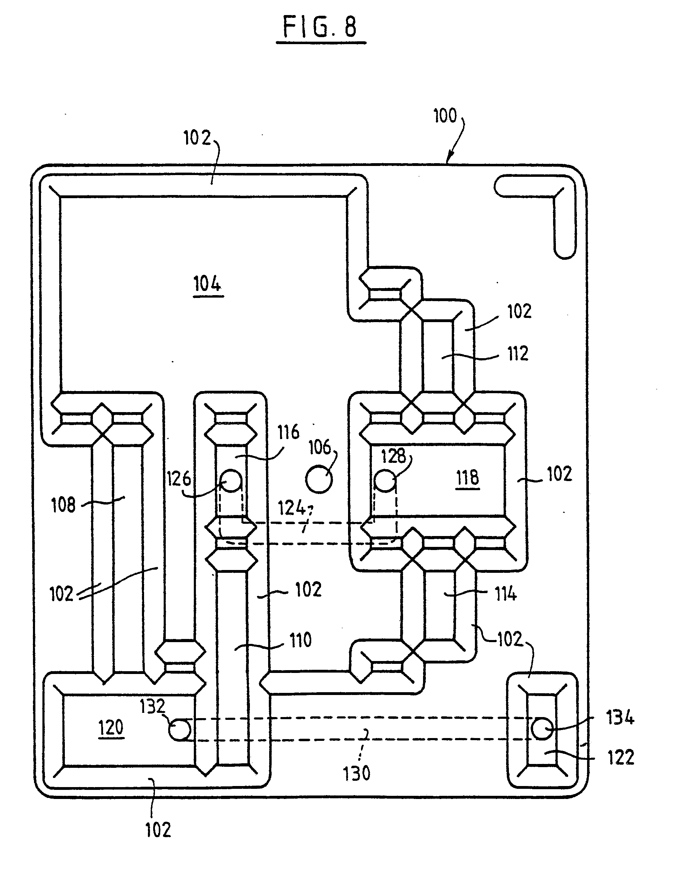

Le premier élément mobile 88 du distributeur, relié au moyen de commande par le câble 34 et le levier de renvoi 36, est une plaque ou coulisseau guidé en déplacement sur l'élément fixe 86 dans la direction indiquée par l'axe 44 en figure 3, et comprend, sur sa face en regard de l'élément fixe 86, une garniture 100 en élastomère ou matière analogue, représentée en détail en figure 8. Cette garniture 100 forme une plaque plane dont la face tournée vers l'élément fixe 86 comprend des lèvres ou nervures 102 délimitant un certain nombre de chambres avec l'élément fixe 86. Ces chambres comprennent notamment une chambre 104 dans laquelle débouche un trou traversant 106 reliant cette chambre 104 en permanence à la source de fluide sous pression 90, par exemple par l'intermédiaire du doigt tubulaire 40 de ce premier élément mobile 88, des chambres 108, 110, 112 et 114 qui sont isolées de façon permanente de la source 90 et de l'échappement, et des chambres 116, 118, 120, 122 qui sont reliées deux à deux, la chambre 116 et la chambre 118 étant reliées entre elles par une rainure 124 de l'autre face de la garniture 100 et deux trous traversants 126 et 128 débouchant dans les chambres 116 et 118 respectivement, les chambres 120 et 122 étant également reliées entre elles par une rainure 130 de l'autre face de la garniture 100 et deux trous traversants 132 et 134 débouchant dans les chambres 120 et 122 respectivement.

Les chambres 104, 108, 110, 112, 114, 116, 118, 120 et 122 sont entourées de façon continue par des nervures ou lèvres d'étanchéité 102. L'espace se trouvant à l'extérieur de ces contours continus forme une chambre reliée directement à l'échappement ou chambre de mise à l'air libre.

Les lèvres 102 sont doubles lorsqu'elles se trouvent entre deux chambres reliées à l'échappement et à la source de dépression respectivement, pour éviter que ces deux chambres puissent être reliées ensemble par un trou d'un élément qui pourrait être déplacé d'une chambre à l'autre.

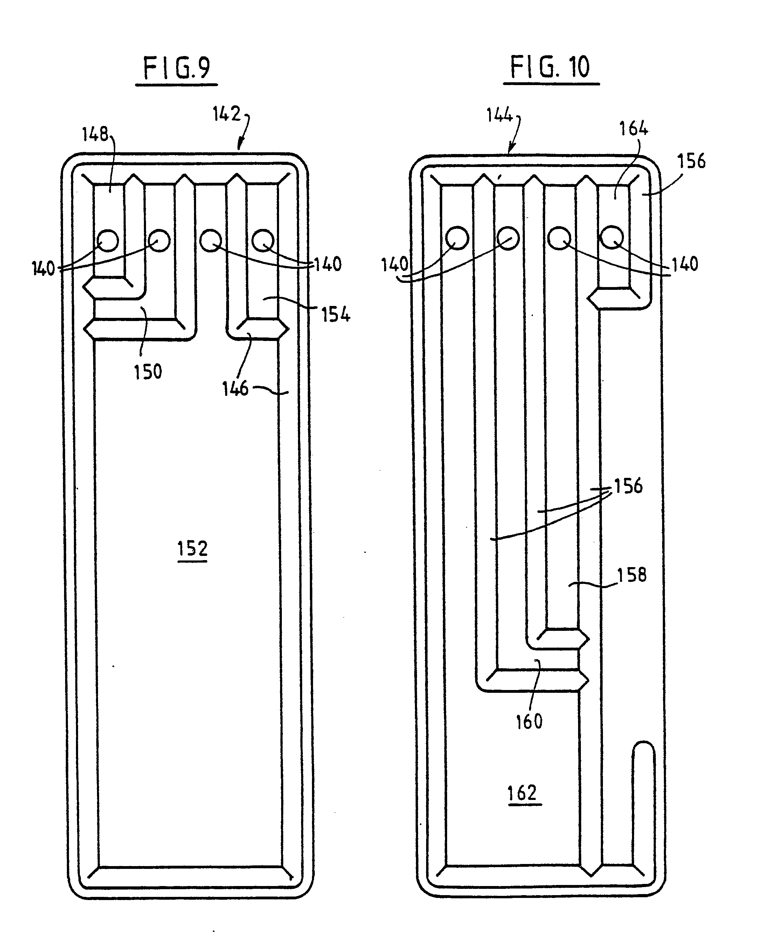

L'élément fixe 86 du distributeur comprend huit trous traversants 140, qui sont transversalement alignés et disposés de façon à déboucher dans les diverses chambres formées avec le premier élément mobile 88 et sa garniture 100. Ces trous 140 sont formés également à travers les garnitures 142 et 144 qui sont portées fixement par la face de l'élément fixe 86 tournée vers les seconds éléments mobiles 70 et 70' et qui sont représentées en détail dans les figures 9 et 10.

La garniture 142 est en élastomère ou matière analogue, comme la garniture 100, et comprend également des lèvres ou nervures d'étanchéité en saillie 146 délimitant quatre chambres 148, 150, 152 et 154 dans chacune desquelles débouche un trou 140 précité.

De même, la garniture d'étanchéité 144, en matière élastomère ou analogue, comprend des lèvres ou nervures d'étanchéité 156 délimitant quatre chambres 158, 160, 162 et 164, dans chacune desquelles débouche un trou traversant 140.

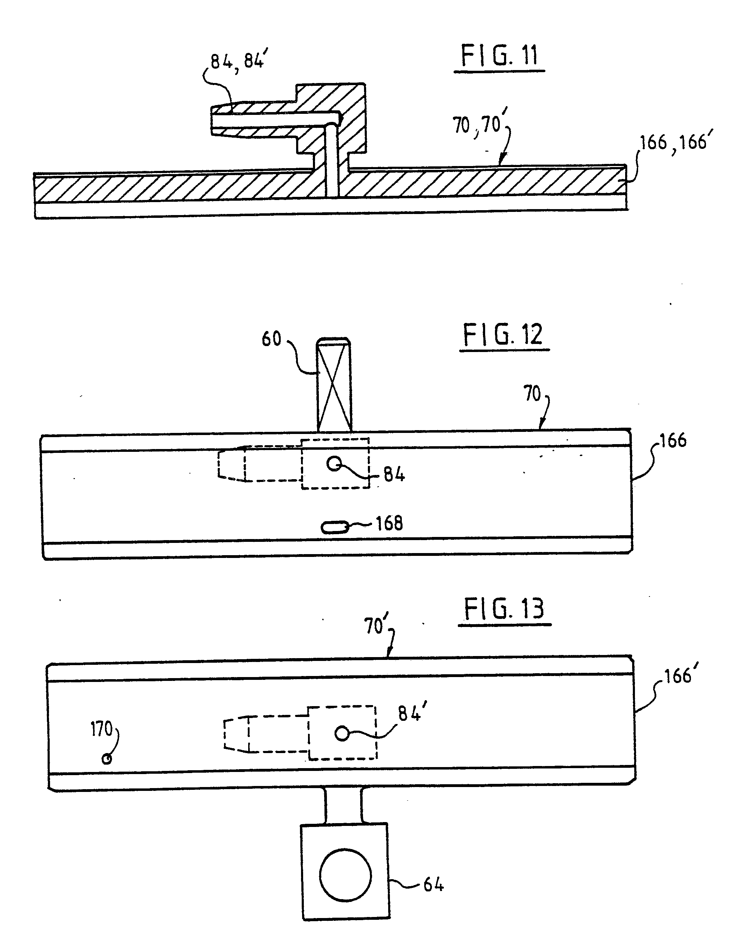

Les seconds éléments mobiles 70 et 70', qui se déplacent à étanchéité sur les garnitures 142 et 144 sont représentés plus en détail dans les figures 11 à 13.

Chaque second élément mobile 70 ou 70' a une section transversale en U et est formé essentiellement d'une plaque 166, 166' dans laquelle débouche le passage de fluide 84, 84' destiné à être relié à l'orifice d'alimentation du vérin correspondant 46, 48, et qui porte le doigt latéral 60 ou 64 par lequel cet élément mobile est relié à la tige de piston du vérin correspondant.

Dans le cas du second élément mobile 70 associé au volet V1, le passage de fluide 84 débouche sur la face interne de la plaque 66 à une distance des rebords latéraux de cette plaque telle que le débouché de ce passage 84 se déplacera longitudinalement dans la chambre 148, puis dans la chambre 150, et enfin dans la chambre 152 délimitée avec garniture 142 quand l'élément mobile 70 se déplacera par rapport à l'élément fixe 86. La face interne de la plaque 166 comprend également une rainure 168, non traversante, formée en regard du débouché du passage 84 et s'étendant sur une certaine distance, au voisinage du rebord latéral opposé de la plaque 166, de façon à ce que cette rainure 168 puisse établir une liaison entre les chambres 152 et 154 par chevauchement d'une lèvre ou nervure d'étanchéité 146, quand l'élément mobile 70 est dans la position voulue par rapport à l'élément fixe 86.

Le second élément mobile 70' associé au volet V2 comprend un trou traversant 170, au voisinage d'une de ses extrémités longitudinales et d'un des rebords latéraux de la plaque 166', de telle sorte que ce trou traversant 170 puisse déboucher dans la chambre 164 formée avec la garniture 144 lorsque cet élément mobile 70' est dans la position voulue par rapport à l'élément fixe 86. Le passage de fluide 84' relié à l'orifice d'alimentation du vérin correspondant débouche sur la face interne de la plaque 166' en une position telle qu'il est successivement mis en communication avec les chambres 158, 160 et 162 quand l'élément mobile 70' est déplacé par rapport à l'élément fixe 86 du distributeur.

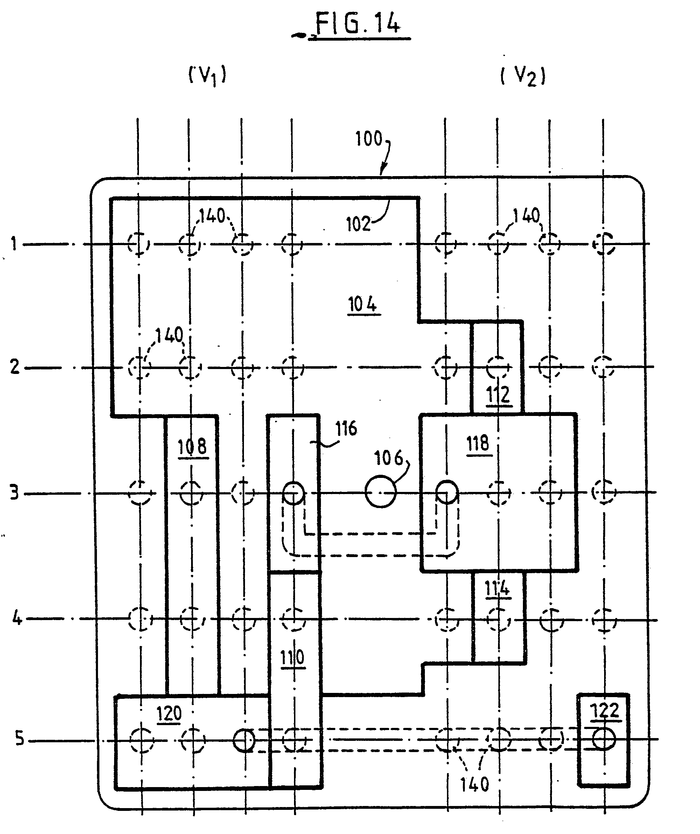

Le fonctionnement de ce distributeur va maintenant être expliqué en référence aux figures 14 à 16.

En figure 14, on a représenté de façon simplifiée la garniture 100 du premier élément mobile relié au moyen de commande, ses lèvres ou nervures d'étanchéité 102 et les différentes chambres formées par ces lèvres, ainsi que les différentes positions des débouchés des trous traversants 140 de l'élément fixe 86 du distributeur, lorsque le premier élément mobile 88 est déplacé par le moyen de commande dans cinq positions prédéterminées 1, 2, 3, 4, 5 sur l'élément fixe 86.

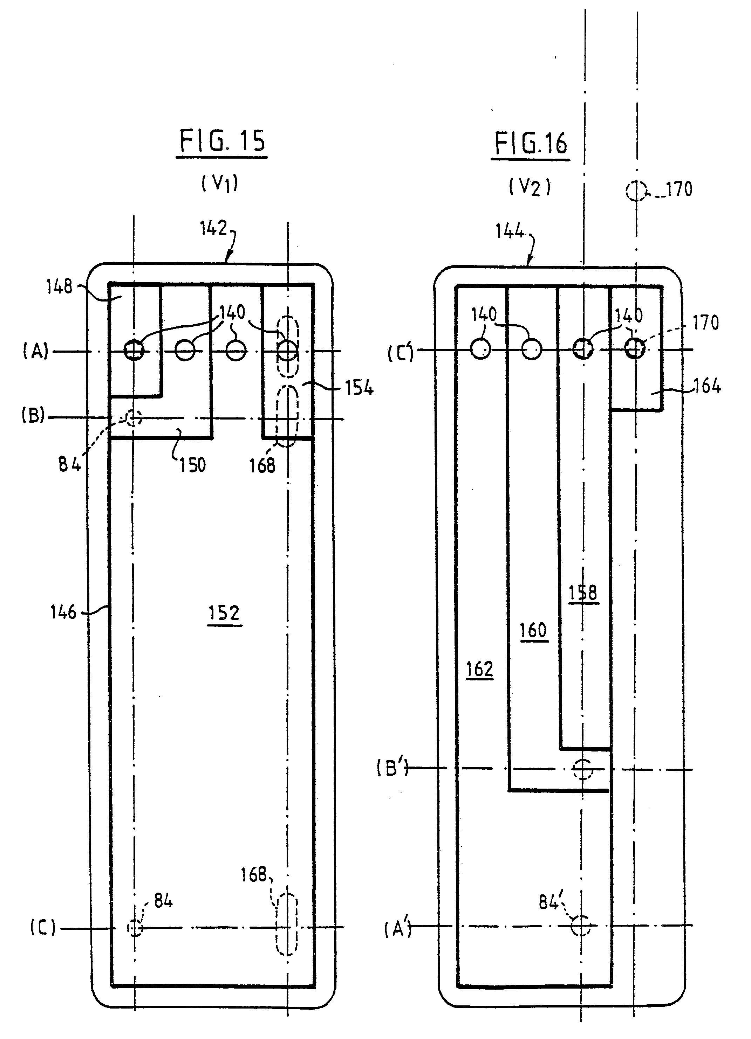

Les figures 15 et 16 représentent de même les garnitures fixes 142 et 144 de façon simplifiée, ainsi que les positions relatives sur ces garnitures des débouchés des passages de fluide 84 et 84', de la rainure 168 et du trou traversant 170 des seconds éléments mobiles 70 et 70' selon que les volets associés V1 et V2 se trouvent dans leurs positions A, B, C et A', B', C'.

Lorsque le moyen de commande est dans l'état ou la position n° 1 de la figure 2, l'élément mobile 88 qui lui est associé dans le distributeur est dans une position par rapport à l'élément fixe 86 du distributeur telle que les trous 140 de cet élément fixe sont alignés transversalement sur la ligne n° 1 de la figure 14. Il en résulte que les quatre trous 140 formés également dans la garniture 142 associée à l'élément mobile 70 débouchent dans la chambre 104 qui est reliée en permanence à la source de dépression par le trou 106 et le doigt tubulaire 40 du premier élément mobile 88. En conséquence, les quatre chambres 148, 150, 152 et 154 formées entre la garniture 142 et le second élément mobile 70 sont toutes alimentées en dépression et le vérin 46 associé est alimenté en dépression, par le passage de fluide 84 qui débouche nécessairement dans une chambre alimentée en dépression, quelle que soit la position du second élément mobile 70 (et donc du volet V1) par rapport à l'élément fixe 86 du distributeur. Le vérin 46 étant alimenté en dépression, la tige de piston 50 est rétractée complètement à l'intérieur du vérin, le volet V1 est amené dans sa position A, et le second élément mobile 80 du distributeur, associé à ce volet, se trouve sur l'élément fixe 86 dans une position telle que le débouché du passage 84 et la rainure 168 se trouvent sur la ligne transversale A de la figure 4.

En ce qui concerne le volet V2, on voit sur la moitié droite de la figure 14 que les quatre trous traversants 140 qui sont formés également à travers la garniture 144 débouchent sur la garniture 100 en dehors des chambres délimitées par des lèvres ou nervures d'étanchéité 102, c'est-à-dire débouchent directement à l'air libre. Il en résulte que les quatre chambres 158, 160, 162 et 164 formées entre la garniture 144 et le second élément mobile 70' associé au vérin V2, sont toutes reliées à l'échappement, que le vérin 48 est donc mis à l'échappement, que la tige de piston 52 est sortie complètement du vérin 48 et que le volet V2 se trouve dans sa position A' de la figure 2. Pour cette position, le débouché du passage de fluide 84' du second élément mobile 70' se trouve sur la ligne transversale A' par rapport à la garniture fixe 144 (figure 16).

Lorsque le moyen de commande est amené ou déplacé dans son état n° 2, les trous 140 de l'élément fixe du distributeur débouchent sur la membrane 100 en étant alignés transversalement sur la ligne n° 2 de la figure 14. On voit que les quatre trous 140 formés également dans la membrane 142 (partie gauche de la figure 14) débouchent encore dans la chambre 104 reliée à la source de dépression, ce qui ne modifie pas la position du volet V1 associé par rapport à la position n° 1.

Par contre, on voit sur la moitié droite de la figure 14 que l'un des trous 140 formés également dans la membrane 144 débouche dans la chambre 104 reliée en permanence à la source de dépression, qu'un autre trou 140 débouche dans la chambre isolée 112, les deux autres trous débouchant à l'atmosphère. Il en résulte que, en référence à la figure 16, la chambre 162 est alimentée en dépression et que la chambre 160 est isolée, la chambre 158 restant reliée à l'échappement. En conséquence, le volet V2 est nécessairement amené et maintenu dans sa position B' de la figure 2. Dans cette position, le second élément mobile 70' du distributeur, associé au volet V2, occupe par rapport à la garniture 144 une position telle que son passage de fluide 84' débouche sur la ligne B' de la figure 16, dans la chambre 160 qui est isolée de la source de dépression et de l'atmosphère.

Lorsque le moyen de commande est dans sa position ou son état n° 3 de la figure 2, les trous 140 de l'élément fixe 86 du distributeur débouchent sur la garniture 100 en étant alignés transversalement sur la ligne n° 3 de la figure 14.

Les trous 140 formés également dans la garniture 142 débouchent, l'un à l'atmosphère, le deuxième dans la chambre isolée 108, le troisième dans la chambre 104 reliée en permanence à la source de dépression, et le quatrième dans la chambre 116 reliée à la chambre 118. En se reportant à la figure 15, on voit que la chambre 148 est reliée à l'échappement, que la chambre 150 est isolée et que la chambre 152 est reliée à la source de dépression. Dans ces conditions, le volet V1 est nécessairement amené et maintenu dans sa position B de la figure 2.

Le débouché du passage 84 de l'élément mobile 70 sur la garniture 142 se trouve donc sur la ligne transversale B de la figure 15. Dans cette position, la rainure 168 est à cheval entre les chambres 152 et 154 et relie celles-ci. Il en résulte que la chambre 154 est reliée par la chambre 152 à la chambre 104 qui est elle-même reliée en permanence à la source de dépression. La chambre 154 est donc alimentée en dépression et, comme elle communique avec la chambre 116 par un trou traversant 140, les chambres 116 et 118 sont donc également reliées à la source de dépression, lorsque le volet V1 se trouve dans sa position B de la figure 2.

Dans la position ou l'état n° 3 du moyen de commande, les trois premiers trous traversants formés également dans la garniture 144 débouchent dans la chambre 118 tandis que le quatrième trou traversant 140 (le plus à droite en figure 14) débouche à l'air libre (à l'échappement). Il en résulte que les trois chambres 158, 160, 162 sont alimentées en dépression par les chambres 118, 116, 154, 152 et 104 lorsque le volet V1 se trouve dans la position B (la rainure 168 faisant communiquer les chambres 154 et 152) et qu'elles sont isolées de la source de dépression et de l'échappement lorsque le volet V1 est dans une position autre que la position B ou très voisine de cette position B. Ainsi, le vérin 48 associé au volet V2 est alimenté en dépression pour l'état n° 3 du moyen de commande, uniquement si le volet V1 se trouve dans la position B, et est isolé de la source de dépression ou de l'échappement si le volet V1 est dans une autre position. Le vérin 48 étant alimenté en dépression, la tige de piston 52 est rétractée, le volet V2 est amené dans sa position C' et le second élément 70' est dans une position telle que son passage 84' débouche sur la ligne C' en figure 16.

Lorsque le moyen de commande est dans sa position ou son état n° 4, les trous 140 de l'élément fixe 86 du distributeur débouchent sur la garniture 100 le long de la ligne n° 4 de la figure 14. Les quatre premiers trous 140 de la partie gauche, formés également à travers la garniture 142, débouchent, dans l'ordre, à l'atmosphère, dans la chambre 108, dans la chambre 104 et dans la chambre isolée 110. Ces raccordements sont les mêmes que pour l'état n° 3 du moyen de commande et la position du volet V1 n'est donc pas modifiée.

Les quatre autres trous 140 formés également à travers la garniture 144 débouchent, l'un dans la chambre 104 reliée à la source de dépression, le deuxième dans la chambre isolée 114, le troisième et le quatrième à l'atmosphère. Il en résulte que la chambre 162 formée par la garniture 144 avec le second élément mobile 70' du distributeur est alimentée en dépression, la chambre 160 est isolée, la chambre 158 et la chambre 164 sont reliées à l'échappement. En conséquence, le vérin 48 est alimenté en dépression si le passage de fluide 84' débouche dans la chambre 162, il est isolé de la source de dépression et de l'échappement si ce passage de fluide débouche dans la chambre 160, il est mis à l'échappement si le passage de fluide débouche dans la chambre 158. Le volet V2 est donc nécessairement amené et maintenu dans sa position B' de la figure 2, position pour laquelle le passage de fluide 84' du second élément mobile 70' du distributeur débouche sur la garniture 144 dans la chambre 160, au niveau de la ligne B' de la figure 16.

Lorsque le moyen de commande est amené dans son état ou sa position n° 5, les trous traversants 140 de l'élément fixe 86 du distributeur débouchent sur la garniture 100 le long de la ligne n° 5 en figure 14.

Les trous traversants 140 formés également à travers la garniture 142 débouchent dans la chambre 120, à l'exception du dernier trou 140, qui débouche dans la chambre isolée 110. En conséquence, les trois chambres 148, 150 et 152 formées par la garniture 142 avec le second élément mobile 70 du distributeur communiquent avec la chambre 120 qui est elle-même reliée à la chambre 122. La chambre 154 est reliée à la chambre 110 qui est isolée.

Les quatre trous traversants 140 de l'élément fixe 86, qui sont formés également à travers la garniture 144, débouchent, pour les trois premiers, sur une zone de la garniture 100 qui est extérieure aux nervures ou lèvres d'étanchéité 102 et sont donc reliés à l'atmosphère. Le quatrième trou 140, situé le plus à droite, débouche dans la chambre 122. En conséquence, les chambres 162, 160 et 158 formées par la garniture 144 avec le second élément mobile 70' du distributeur sont mises à l'échappement. Le vérin 48 est donc mis à l'échappement par le passage de fluide 84' qui débouche nécessairement dans l'une des trois chambres 158, 160 et 162, le volet V2 est amené dans sa position A' de la figure 2, pour laquelle le passage de fluide 84' débouche sur la garniture 144 au niveau de la ligne A' de la figure 16. Dans cette position, le trou traversant 170 formé dans le second élément mobile 70' débouche dans la chambre 164 et relie celle-ci à l'atmosphère. Les chambres 122 puis 120 sont reliées à l'atmosphère par la chambre 164 et le trou 170, de sorte que les trois chambres 148, 150 et 152 formées par la garniture 142 avec l'élément mobile 70 du distributeur sont reliées à l'atmosphère. Le vérin 46 est ainsi mis à l'échappement et le volet V1 est déplacé dans sa position C de la figure 2.

Tant que le volet V2 n'est pas dans sa position A' de la figure 2, le trou traversant 170 du second élément mobile 70' du distributeur ne débouche pas dans la chambre 164, qui est donc isolée de la source de dépression et de l'échappement, les chambres 120 et 122 sont également isolées. En d'autres termes, les chambres 120 et 122 sont, ou bien reliées à l'échappement lorsque le volet V2 est dans sa position A' ou au voisinage immédiat de celle-ci, ou bien isolées de la source de dépression et de l'échappement lorsque le volet V2 est dans une autre position.

Il en résulte que, quand le moyen de commande est dans sa position ou son état n° 5, les chambres 148, 150 et 152, et donc le vérin 46, sont isolés de la source de dépression et de l'échappement si le volet V2 n'est pas dans sa position A' ou au voisinage immédiat de celle-ci, de sorte que le volet V1 n'est pas déplacé et reste dans la position où il se trouvait, et lorsque le volet V2 se trouve dans sa position A' ou dans le voisinage, les chambres précitées 148, 150 et 152, et donc le vérin 46, sont reliés à l'échappement et le volet V1 est amené dans sa position C.

Le dispositif selon l'invention permet, comme on vient de le voir, de commander le déplacement prioritaire d'un volet d'une de ses positions dans l'autre avant que l'autre volet ne puisse être déplacé, lorsque cela est nécessaire pour éviter un blocage mutuel des volets.

Chaque garniture 142 ou 144 détermine avec le second élément mobile 70 ou 70' du distributeur, trois chambres 148, 150, 152 ou 158, 160, 162 qui servent à l'alimentation du vérin associé 46 ou 48, et une quatrième chambre 154 ou 164 qui sert à détecter la présence dans une position déterminée du volet V1 ou V2 associé à l'élément mobile 70 ou 70'. On pourrait bien entendu prévoir plusieurs chambres 154 ou 164 sur chaque garniture 142 ou 144, qui permettraient de détecter la présence du volet dans plusieurs positions prédéterminées.

De même, la garniture 100 associée au moyen de commande détermine avec l'élément fixe du distributeur deux séries de chambres 116-118 et 120-122 qui ne permettent la liaison, avec la source de dépression ou avec l'échappement, du vérin associé à un volet que si l'autre volet est dans une position déterminée. On pourrait également augmenter le nombre de ces séries de chambres 116-118 et 120-122.

Le dispositif selon l'invention, qui a été décrit dans un exemple d'application à la commande de deux volets, est applicable sans aucune difficulté à la commande d'un plus grand nombre de volets.

On peut également asservir le déplacement d'un volet, non seulement à la présence ou à l'absence d'un autre volet dans une position déterminée, mais aussi à la présence ou à l'absence de deux autres volets dans des positions déterminées. Il suffit pour cela de former, au niveau de la garniture 100, des groupes de trois chambres reliées entre elles en permanence, à la place des groupes de deux chambres reliées entre elles.

## Revendications

1. Dispositif de commande d'organes mobiles, tels que des volets (V1, V2) d'une installation de chauffage et de ventilation ou de climatisation pour véhicule automobile, comprenant des vérins (46, 48) du type tout ou rien dont les tiges de piston sont reliées aux organes mobiles, un distributeur de fluide (32) sous pression relié, d'une part, aux orifices d'alimentation des vérins et, d'autre part, à une source de fluide sous pression et à un échappement, et un moyen de commande (34) du distributeur, disposé par exemple sur le tableau de bord du véhicule et pouvant occuper un certain nombre de positions ou d'états prédéterminés auxquels correspondent des positions prédéterminées des organes mobiles, caractérisé en ce qu'il comprend des moyens fluidiques (116, 118, 120, 122, 154, 164) d'asservissement du déplacement d'au moins un organe mobile (V1, V2) au déplacement d'au moins un autre organe mobile (V2, V1), ces moyens étant propres à détecter la présence ou l'absence d'un organe mobile dans une position prédéterminée pour autoriser ou interdire le déplacement d'un autre organe mobile en fonction de la présence ou de l'absence détectée.

2. Dispositif selon la revendication 1, caractérisé en ce que les moyens fluidiques d'asservissement sont intégrés au distributeur (32) de fluide sous pression.

3. Dispositif selon la revendication 1 ou 2, caractérisé en ce que les moyens d'asservissement comprennent des chambres (116, 118, 120, 122) formées dans le distributeur (32), dont chacune est, d'autre part, propre à être reliée à l'orifice d'alimentation du vérin (46, 48) de déplacement d'un organe mobile déterminé (V1, V2) quand ledit moyen de commande est dans une position ou un état déterminé et à en être isolée quand le moyen de commande est dans une autre position ou un autre état et, d'autre part, propre à être reliée à l'échappement ou à la source de fluide sous pression par des moyens (154, 164, 168, 170) associés à un autre organe mobile uniquement lorsque cet autre organe mobile est dans une position prédéterminée, et à en être isolée quand cet autre organe mobile est dans une autre position.

4. Dispositif selon la revendication 3, caractérisé en ce que ces chambres sont formées dans le distributeur (32) entre un élément fixe (86) de celui-ci et un premier élément mobile (88), relié au moyen de commande et déplaçable par celui-ci dans des positions prédéterminées sur l'élément fixe (86).

5. Dispositif selon la revendication 4, caractérisé en ce que ces chambres (116-118 et 120-122) sont reliées deux à deux entre elles de façon permanente, deux chambres ainsi reliées entre elles étant associées l'une à un organe mobile

(V1) pour détecter sa présence ou son absence dans une position déterminée et l'autre à un autre organe mobile (V2) pour autoriser ou interdire son déplacement vers une position déterminée.

6. Dispositif selon la revendication 4 ou 5, caractérisé en ce que le distributeur (32) comprend des seconds éléments mobiles (70 et 70') dont chacun est relié à la tige de piston (50, 52) d'un vérin (46, 48) ou à l'organe mobile (V1, V2) associé et est déplaçable sur l'élément fixe (86) dans des positions déterminées, cet élément fixe (86) comprenant des passages de fluide (140) établissant des communications entre des chambres formées avec le premier élément mobile (88) est des chambres formées avec les seconds éléments mobiles (70 et 70') en fonction des positions desdits éléments mobiles (70 et 70') sur l'élément fixe (86).

7. Dispositif selon la revendication 6, caractérisé en ce que les chambres formées entre l'élément fixe et le premier élément mobile (88) comprennent au moins une chambre (104) reliée à la source de fluide sous pression, une chambre reliée à l'échappement, une chambre (108, 110, 112, 114) isolée de la source de fluide sous pression et de l'échappement, et des chambres précitées (116, 118, 120, 122) faisant partie des moyens d'asservissement et qui sont propres à être reliées à la source de fluide sous pression ou à l'échappement et à en être isolées en fonction des positions des organes mobiles (V1 et V2).

8. Dispositif selon la revendication 6 ou 7, caractérisé en ce que les chambres formées entre l'élément fixe (86) et chacun des seconds éléments mobiles (70, 70') comprennent un nombre de chambres égal au nombre de positions que peut occuper cet élément mobile (70, 70') sur l'élément fixe (86), et au moins une chambre supplémentaire (154, 164) pour détecter la présence de l'élément mobile (70, 70') dans une position déterminée sur l'élément fixe (86).

9. Dispositif selon la revendication 8, caractérisé en ce que cette chambre supplémentaire (151, 164) est reliée à la source de fluide sous pression ou à l'échappement par un passage de fluide (168, 170) de l'élément mobile (70, 70') quand celui-ci est dans ladite position déterminée, et en est isolée quand l'élément mobile est dans une autre position.

10. Dispositif selon l'une des revendications 6 à 9, caractérisé en ce que chaque second élément mobile (70, 70') est relié à l'orifice d'alimentation du vérin (46, 48) associé par un conduit de fluide (84, 84') dont une extrémité débouche dans l'une ou l'autre des chambres (148, 150, 152, 158, 160, 162) formées avec l'élément fixe (86).

11. Dispositif selon l'une des revendications 6 à 10, caractérisé en ce que l'élément fixe (86) comprend autant de passages de fluide (140) par second élément mobile (70, 70') qu'il y a de chambres entre l'élément fixe (86) et ce second élément mobile (70, 70'), chacune de ces chambres étant reliée en permanence par un de ces passages de fluide (140) à une chambre formée entre l'élément fixe (86) et le premier élément mobile (88) associé au moyen de commande.

12. Dispositif selon l'une des revendications 6 à 11, caractérisé en ce que l'élément fixe (86) du distributeur (32) comprend une plaque disposée à étanchéité entre le premier élément mobile (88) et les seconds éléments mobiles (70, 70'), les passages de fluide précités de l'élément fixe étant des trous (140) traversant ladite plaque.

13. Dispositif selon l'une des revendications 6 à 12, caractérisé en ce que la face de l'élément fixe (86) qui est orientée vers les seconds éléments mobiles (70 et 70') est revêtue d'au moins une garniture (142, 144) à lèvres ou nervures d'étanchéité (146, 156) appliquées sur une face plane de chaque second élément mobile (70, 70') pour délimiter les chambres précitées.

14. Dispositif selon l'une des revendications 6 à 13, caractérisé en ce que le premier élément mobile (88) du distributeur comprend une plaque dont la face tournée vers l'élément fixe (88) est revêtue d'une garniture (100) à lèvres ou nervures d'étanchéité (102) appliquées sur l'élément fixe (86) pour délimiter les chambres précitées.

## Claims

1. A control device for moving members such as flaps (V1, V2) in an installation for heating and ventilating or air conditioning a motor vehicle, the device comprising actuators (46, 48) of the on/off type whose piston rods are connected to the moving members, a distributor (32) for distributing fluid under pressure and connected firstly to the feed orifices of the actuators and secondly to a source of fluid under pressure and to an exhaust, and distributor control means (34) for controlling the distributor and disposed, for example, on the dashboard of the vehicle and capable of occupying a certain number of predetermined states or positions which correspond to predetermined positions of the moving members, the device being characterized in that it includes fluidic servo-control means (116, 118, 120, 122, 154, 164) for servo-controlling the displacement of at least one moving member (V1, V2) to the displacement of at least one other moving member (V2, V1), said means being suitable for detecting the presence or the absence of a moving member in a predetermined position in order to enable or disable the displacement of another moving member as a function of the detected presence or absence.

2. A device according to claim 1, characterized in that the fluidic servo-control means are integrated in the distributor (32) for distributing fluid under pressure.

3. A device according to claim 1 or 2, characterized in that the servo-control means comprise chambers (116, 118, 120, 122) formed in the distributor (32), with each chamber being suitable firstly for connection to the feed orifice of the actuator (46, 48) for displacing a given moving member (V1, V2) when said control means is in a determined state or position, and for being isolated therefrom when the control means is in another state or position, and secondly is suitable for being connected to the exhaust or to the source of fluid under pressure by means (154, 164, 168, 170) associated with another moving member solely when said other moving member is in a predetermined position, and to be isolated therefrom when said other moving member is in another position.

4. A device according to claim 3, characterized in that said chambers are formed in the distributor (32) between a fixed element (86) thereof and a first moving element (88) which is connected to the control means and which is displaceable by the control means into predetermined positioned on the fixed element (86).

5. A device according to claim 4, characterized in that the chambers (116-118 and 120-122) are interconnected in pairs in permanent manner, with one of the two chambers interconnected in this way being associated with one moving member (V1) in order to detect the presence or the absence thereof in a determined position, and with the other chamber being connected to the other moving member (V2) in order to enable or to inhibit displacement thereof towards a determined position.

6. A device according to claim 4 or 5, characterized in that the distributor (32) includes second moving elements (70 and 70') each of which is connected to the piston rod (50, 52) of an actuator (46, 48) or to the associated moving member (V1, V2) and is displaceable over the fixed element (86) in the determined positions, said fixed element (86) including fluid passages (140) establishing communication between the chambers formed with the first moving element (88) and the chambers formed with the second moving elements (70 and 70') as a function of the positions of said moving elements (70 and 70') on the fixed element (86).

7. A device according to claim 6, characterized in that the chambers formed between the fixed elements and the first moving element (88) include at least one chamber (104) connected to the source of fluid under pressure, a chamber connected to the exhaust, a chamber (108, 110, 112, 114) which is isolated from the source of fluid under pressure and from the exhaust, and the above-mentioned chambers (116, 118, 120, 122) forming a portion of the servo-control means and suitable for being connected to the source of fluid under pressure or to the exhaust and for being isolated therefrom as a function of the positions of the moving members (V1 and V2).

8. A device according to claim 6 or 7, characterized in that the chambers formed between the fixed element (86) and each of the second moving elements (70, 70') comprise a number of chambers equal to the number of positions that said moving element (70, 70') may occupy on the fixed element (86), and at least one additional chamber (154, 164) for detecting the presence of the moving element (70, 70') in a determined position on the fixed element (86).

9. A device according to claim 8, characterized in that said additional chamber (154, 164) is connected to the source of fluid under pressure or to the exhaust via a fluid passage (168, 170) of the moving element (70, 70') when said moving element is in said determined position, and is isolated therefrom when the moving element is in another position.

10. A device according to any one of claims 6 to 9, characterized in that each second moving element (70, 70') is connected to the feed orifice of the associated actuator (46, 48) via a fluid duct (84, 84') having one end opening out into one or other of the chambers (148, 150, 152, 158, 160, 162) formed with the fixed element (86).

11. A device according to any one of claims 6 to 10, characterized in that the fixed element (86) includes as many fluid passages (140) per second moving element (70, 70') as there are chambers between the fixed element (86) and said second moving element (70, 70'), each of said chambers being permanently connected via one of said fluid passage (140) to a chamber formed between the fixed element (86) and the first moving element (88) associated with the control means.

12. A device according to any one of claims 6 to 11, characterized in that the fixed element (86) of the distributor (32) includes a plate disposed in sealed manner between the first moving element (88) and the second moving elements (70, 70'), with the above-mentioned fluid passages of the fixed element being holes (140) passing through said plate.

13. A device according to any one of claims 6 to 12, characterized in that the face of the fixed element (86) which is oriented towards the second moving elements (70 and 70') is coated with at least one coating (142, 144) having sealing ribs or lips (146, 156) pressed against a plane face of each second moving element (70, 70') in order to delimit the above-mentioned chambers.

14. A device according to any one of claims 6 to 13, characterized in that the first moving element (88) of the distributor includes a plate whose face facing the fixed element (88) is coated with a coating (100) having sealing ribs or lips (102) pressed against the fixed element (86) in order to delimit the above-mentioned chambers.

**Patentansprüche**

1. Steuerungseinrichtung für bewegliche Teile, insbesondere Klappen (V1, V2) einer Heizungs- und Ventilations-einrichtung oder einer Klimaanlage für Kraftfahrzeuge, mit Linearantrieben (46, 48) vom Typ alles oder nichts, deren Kolbenstangen mit den beweglichen Teilen verbunden sind, einem Druckfluidverteiler (32), der einerseits mit den Zuführungsöffnungen der Linearantriebe und andererseits mit einer Druckfluidquelle und einem Auslaß verbunden ist, und einer Verteilersteuerungseinrichtung (34), die z. B. an dem Armaturenbrett des Fahrzeugs angeordnet ist und eine gewisse Anzahl von Stellungen oder vorbestimmten Zuständen annehmen kann, denen vorbestimmte Stellungen der beweglichen Teile entsprechen, dadurch gekennzeichnet, daß die Einrichtung Fluidsteuerungsmittel (116, 118, 120, 122, 154, 164) zur Bewegung wenigstens eines beweglichen Teils (V1, V2) bei der Bewegung wenigstens eines anderen beweglichen Teils (V2, V1) aufweist, wobei mit diesen Mitteln das Vorhandensein oder Fehlen eines beweglichen Teils in einer vorbestimmten Stellung erfaßt werden kann, um die Bewegung eines anderen beweglichen Teils in Abhängigkeit des erfaßten Vorhandenseins oder Fehlens zu erlauben oder zu unterbinden.

2. Einrichtung nach Anspruch 1, dadurch gekennzeichnet, daß die Fluidsteuerungsmittel mit dem Druckfluidverteiler (32) integriert sind.

3. Einrichtung nach Anspruch 1 oder 2, dadurch gekennzeichnet, daß die Steuerungsmittel Kammern (116, 118, 120, 122) umfassen, die in dem Verteiler (32) ausgebildet sind und von denen jede einerseits mit der Zuführungsöffnung des Linearantriebs (46, 48) zur Bewegung eines bestimmten beweglichen Teils (V1, V2) verbunden werden kann, wenn sich das genannte Steuerungsmittel in einer bestimmten Stellung oder einem bestimmten Zustand befindet, und von jener getrennt ist, wenn das Steuerungsmittel in einer anderen Stellung oder einem anderen Zustand ist, und andererseits mit dem Auslaß oder der Druckfluidquelle durch mit einem anderen beweglichen Teil verbundene Mitteln (154, 164, 168, 170) nur dann verbunden werden kann, wenn sich dieser andere bewegliche Teil in einer vorbestimmten Stellung befindet, und davon getrennt ist, wenn dieser andere bewegliche Teil eine andere Stellung aufweist.

4. Einrichtung nach Anspruch 3, dadurch gekennzeichnet, daß diese Kammern in dem Verteiler (32) zwischen einem festen Element (86) desselben und einem ersten, beweglichen Element (88) gebildet sind, welches mit der Steuerungseinrichtung verbunden ist und durch diese in vorbestimmte Stellungen auf dem festen Element (86) bewegbar ist.

5. Einrichtung nach Anspruch 4, dadurch gekennzeichnet, daß diese Kammern (116-118 und 120-122) paarweise untereinander dauerhaft verbunden sind, wobei von zwei derart miteinander verbundenen Kammern eine einem beweglichen Teil (V1) zugeordnet ist, um dessen Vorhandensein oder Fehlen in einer bestimmten Stellung zu erfassen, und die andere einem anderen beweglichen Teil (V2) zugeordnet ist, um dessen Bewegung zu einer bestimmten Stellung zu erlauben oder zu unterbinden.

6. Einrichtung nach Anspruch 4 oder 5, dadurch gekennzeichnet, daß der Verteiler (32) zweite, bewegliche Element (70 und 70') umfaßt, von denen jedes mit der Kolbenstange (50, 52) eines Linearantriebs (46, 48) oder dem zugeordneten, beweglichen Teil (V1, V2) verbunden und auf dem festen Element (86) in bestimmte Stellungen bewegbar ist, wobei dieses feste Element (86) Fluiddurchlässe (180) aufweist, die Verbindungen zwischen mit dem ersten, beweglichen Element (88) gebildeten Kammern und mit den zweiten, beweglichen Elementen (70 und 70') gebildeten Kammern als Funktion der Stellungen der genannten beweglichen Elemente (70 und 70') auf dem festen Element (86) herstellen.

7. Einrichtung nach Anspruch 6, dadurch gekennzeichnet, daß die zwischen dem festen Element und dem ersten, beweglichen Element (88) gebildeten Kammern wenigstens eine mit der Druckfluidquelle verbundene Kammer (104), eine mit dem Auslaß verbundene Kammer, eine von der Druckfluidquelle und dem Auslaß abgetrennte Kammer (108, 110, 112, 114) und die vorgenannten Kammern (116, 118, 120, 122) umfaßt, die Teil der Steuerungsmittel sind und die mit der Druckfluidquelle oder dem Auslaß verbunden und von diesen als Funktion der Stellungen der beweglichen Teile (V1 und V2) getrennt werden können.

8. Einrichtung nach Anspruch 6 oder 7, dadurch gekennzeichnet, daß die zwischen dem festen Element (86) und jedem der zweiten, beweglichen Elemente (70, 70') gebildeten Kammern eine Anzahl von Kammern, die gleich der Anzahl der Stellungen ist, die dieses bewegliche Element (70, 70') auf dem festen Element (86) einnehmen kann, und wenigstens eine zusätzliche Kammer (154, 164) umfassen, um das Vorhandensein des beweglichen Elements (70, 70') in einer bestimmten Stellung auf dem festen Element (86) zu erfassen.

9. Einrichtung nach Anspruch 8, dadurch gekennzeichnet, daß diese zusätzliche Kammer (151, 164) mit der Druckfluidquelle oder dem Auslaß durch einem Fluiddurchlaß (168, 170) des beweglichen Elements (70, 70') verbunden ist, wenn sich dieses in der genannten bestimmten Stellung befindet, und davon getrennt ist, wenn sich das bewegliche Element in einer anderen Stellung befindet.

10. Einrichtung nach einem der Ansprüche 6 bis 9, dadurch gekennzeichnet, daß jedes zweite, bewegliche Element (70, 70') mit der Zuführungsöffnung des zugeordneten Linearantriebs (46, 48) durch eine Fluidleitung (84, 84') verbunden ist, deren eines Ende in die eine oder die andere der Kammern (148, 150, 152, 158, 160, 162) mündet, die mit dem festen Element (86) gebildet sind.

11. Einrichtung nach einem der Ansprüche 6 bis 10, dadurch gekennzeichnet, daß das feste Element (86) so viele Fluiddurchlässe (140) pro zweites, bewegliches Element (70, 70') aufweist, wie Kammern zwischen dem festen Element (86) und diesem zweiten, beweglichen Element (70, 70') vorhanden sind, wobei jede dieser Kammern dauerhaft durch einen dieser Fluiddurchlässe (140) mit einer zwischen dem festen Element (86) und dem ersten, beweglichen Element (88), welches der Steuereinrichtung zugeordnet ist, gebildeten Kammer verbunden ist.

12. Einrichtung nach einem der Ansprüche 6 bis 11, dadurch gekennzeichnet, daß das feste Element (86) des Verteilers (32) eine Platte umfaßt, die dichtend zwischen dem ersten, beweglichen Element (88) und den zweiten, beweglichen Ele-

menten (70, 70') angeordnet ist, wobei die vorgenannten Fluiddurchlässe des festen Elements die genannte Platte durchquerende Löcher (140) sind.

13. Einrichtung nach einem der Ansprüche 6 bis 12, dadurch gekennzeichnet, daß die Seite des festen Elements (86), die zu den zweiten, beweglichen Elementen (70, 70') gewandt ist, mit wenigstens einer Dichtungslippen oder Dichtungsrippen (146, 156) aufweisenden Dichtung (142, 144) bedeckt ist, die an einer ebenen Seite von jedem zweiten, beweglichen Element (70, 70') zur Begrenzung der vorgenannten Kammern anliegen.

14. Einrichtung nach einem der Ansprüche 6 bis 13, dadurch gekennzeichnet, daß das erste bewegliche Element (88) des Verteilers eine Platte umfaßt, dessen zu dem festen Element (88) gewandte Seite mit einer Dichtungslippen oder Dichtungsrippen (102) aufweisenden Dichtung (100) bedeckt ist, die an dem festen Element (86) zur Begrenzung der vorgenannten Kammern anliegen.

FIG.1

# FIG. 2

0 188 142

FIG. 3

## FIG.4

## FIG.5A

### V₁

|   | a | b | c |   |
|---|---|---|---|---|
| 1 | D | D | D | A |
| 2 | D | D | D | A |
| 3 | E | x | D | B |
| 4 | E | x | D | B |
| 5 | E | E | E | C |

## FIG.5B

### V₂

|   | a | b | c |    |
|---|---|---|---|----|
| 1 | E | E | E | A′ |
| 2 | E | x | D | B′ |
| 3 | D | D | D | C′ |
| 4 | E | x | D | B′ |
| 5 | E | E | E | A′ |

FIG.7

40

96   88  100

102   86

142   70  140   94

84

FIG.6

40

88  106  96  100   32

86

140   140

60   142  70  94  70'   144   64

84   84'

# FIG. 8

FIG.9

FIG. 10

FIG. 11

84, 84′

70, 70′

166, 166′

FIG. 12

60

70

166

84

168

FIG. 13

70′

166′

170

84′

64

## FIG.14

FIG. 15
(V₁)

FIG.16
(V₂)